# EUROPÄISCHE PATENTSCHRIFT

(11) **EP 1 529 085 B1**
(45) Veröffentlichungstag und Bekanntmachung des Hinweises auf die Patenterteilung: **14.12.2005**
(21) Anmeldenummer: 03797227.0
(22) Anmeldetag: 07.08.2003
(51) Int. Cl.: C09C 1/66, C09D 5/36

(54) **KUPFERBASIERENDE METALLFLAKES, INSBESONDERE ALUMINIUM ENTHALTEND, UND VERFAHREN ZU IHRER HERSTELLUNG**
COPPER-BASED METAL FLAKES, IN PARTICULAR COMPRISING ALUMINIUM AND METHOD FOR PRODUCTION THEREOF
FLOCONS METALLIQUES A BASE DE CUIVRE CONTENANT NOTAMMENT DE L'ALUMINIUM ET PROCEDE DE FABRICATION

(30) Priorität: 20.08.2002 DE 10237957
(43) Veröffentlichungstag der Anmeldung: 11.05.2005
(73) Patentinhaber: Eckart GmbH & Co. KG, 90763 Fürth (DE); STEINER GMBH & Co. KG, 57339 Erndtebrück (DE)
(72) Erfinder: HERZING, Wolfgang, 91233 Speikern (DE)
(74) Vertreter: Schneck, Herbert
(86) Internationale Anmeldenummer: PCT/EP2003/008730
(87) Internationale Veröffentlichungsnummer: WO 2004/026972

(56) Entgegenhaltungen:
- EP-A- 0 499 817
- US-A- 4 321 087
- DATABASE WPI Section Ch, Week 198601 Derwent Publications Ltd., London, GB; Class A82, AN 1986-003700 XP002260804 & JP 60 229966 A (SHINETSU CHEM IND CO LTD), 15. November 1985 (1985-11-15)
- DATABASE WPI Section Ch, Week 199037 Derwent Publications Ltd., London, GB; Class L03, AN 1990-279703 XP002260805 & JP 02 197502 A (ASAHI CHEM IND CO LTD), 6. August 1990 (1990-08-06)
- PATENT ABSTRACTS OF JAPAN vol. 1997, no. 10, 31. Oktober 1997 (1997-10-31) & JP 09 165544 A (FUKUDA METAL FOIL &POWDER CO LTD), 24. Juni 1997 (1997-06-24)

## Beschreibung

Metallische Effektpigmente sind Pigmente, die gerichtete Reflexion an flächig ausgebildeten, orientierten Partikeln aufweisen (DIN 55944). Das Interesse an goldglänzenden Effektpigmenten ist groß, insbesondere in den Anwendungsgebieten Druck, Lack, Anstrich, Kunststoffeinfärbung, Kosmetik und Glaseinfärbung, da die goldähnlichen Produkte eine hohe ästhetische Qualität besitzen und den entsprechend beschichteten, bedruckten oder eingefärbten Materialien ein wertvolles Aussehen verleihen. Frühzeitig hat man damit begonnen, die teuren Echtgold-Flakes im dekorativen Bereich durch kostengünstigere Alternativen zu ersetzen.

Die bekanntesten Echtgold-Flake-Ersatzpigmente sind die sogenannten Goldbronzepulver, die überwiegend aus Kupfer/Zink-Legierungen bestehen und je nach Zusammensetzung unterschiedliche Farbtöne von Rotgold bis Reichgold aufweisen können (Pigment Handbook, Vol. 1, Second Edition, S. 805 ff, Wiley). Goldbronzepigmente werden durch Verdüsen einer schmelzflüssigen Kupfer/Zink-Legierung und anschließendes Mahlen des bei der Verdüsung entstandenen Grießes hergestellt. Beim Mahlprozess werden die Legierungspartikel plättchenförmig verformt und zerkleinert. In der Praxis wird Goldbronzepigment überwiegend trocken vermahlen. Um Kaltverschweißungen zu vermeiden, wird dem eingesetzten Grieß Schmiermittel wie beispielsweise Stearinsäure zugegeben. Eine Nachbehandlung des Mahlproduktes durch Bürsten oder schonendes Mahlen in speziellen Kugelmühlen dient der Glanzverbesserung des Metallpigments und wird als Polieren bezeichnet. Unregelmäßigkeiten der Oberflächen der Metallplättchen wirken glanzmindernd. Da sich beim Mahlvorgang das Generieren von Unregelmäßigkeiten in der Struktur der Oberflächen der Plättchen und unterschiedliche Plättchendicke nicht vermeiden lassen, weisen die auf diesem Weg hergestellten Goldbronzepigmente nicht den Glanz auf, der sich aus dem Reflexionsvermögen der Legierungen errechnet. Darüber hinaus zeigen praktisch alle über Mahlverfahren hergestellten Goldbronzepigmente leafing-Eigenschaften, d. h. sie schwimmen im Medium auf, was auf die beim Mahlprozess zugesetzten Schmiermittel zurückzuführen ist. Die Herstellung von non-leafing Goldbronzepigmenten erfordert aufwendiges Befreien von Schmiermittel.

Versuche, Echtgoldflakes über eisenoxidbeschichtete Glimmerpigmente (G. Pfaffu. R. Maisch, Farbe+Lack, Vol. 2, 1955, S. 89-93) oder eisenoxidbeschichtete Aluminiumpigmente (W.Ostertag, N.Mronga und P.Hauser, Farbe +Lack, Vol. 12, 1987, S. 973-976) zu ersetzen, führen hinsichtlich der erforderlichen Brillanz nicht zum Ziel. Zwar gelingt es über Interferenzeffekte interessante Farbtöne von Rotgold bis Grüngold herzustellen, es zeigt sich jedoch, dass über oxidische Reflexionsebenen nicht die hohen glanzbestimmenden Reflexionswerte von Metallen erreicht werden können.

Aus der US 4,321,087 ist bekannt, dass Metalle auf einer Unterlage abgeschieden und nach Ablösen und Zerkleinern Pigmente erhalten werden.

Als Verfahren zur Herstellung von metallisierten Schichten können die gängigen Aufdampfverfahren (Elektronenstrahl-Technologie, widerstands-, strahlungsbeheizte Verfahren) zur Anwendung kommen, die beispielsweise in G. Kienel (Herausg.) "Vakuumbeschichtung Band 1-5", VDI-Verlag 1995, ausführlich beschrieben werden.

Bei Legierungen aus zwei oder mehr Komponenten tritt aufgrund unterschiedlicher Dampfdrücke eine Fraktionierung auf. Es existieren unterschiedliche Verdampfungsmethoden (Flash-Verdampfung, Simultanverfahren oder Springstrahlverfahren), mit denen homogene Legierungsschichten beliebiger Zusammensetzung herstellbar sind (G. Kienel).

Aufgabe der Erfindung ist es, ein goldglänzendes, hochbrillantes metallisches Effektpigment, das die Nachteile der oben beschriebenen Echtgold-Ersatzprodukte nicht hat, zu entwickeln.

Es ist insbesondere das Ziel, ein goldglänzendes metallisches Effektpigment mit planparallelen Oberflächen und geringer gleichförmiger Partikeldicke bereitzustellen, so dass das Pigment in allen Bereichen der graphischen Industrie, insbesondere auch im Offsetdruck, angewandt werden kann.

Ein weiteres Ziel der vorliegenden Erfindung ist eis, ein goldglänzendes metallisches Effektpigment in diversen Farbtönen von Rotgold bis Grüngold bereitzustellen.

Ein weiteres Ziel der vorliegenden Erfindung ist es, das goldglänzende metallische Effektpigment korrosionsstabil bereitzustellen, so dass es in den üblichen Anwendungsbereichen nicht zu einer Beeinträchtigung in Glanz und Farbton der Produkte kommt.

Es sollte darüber hinaus zu wirtschaftlich tragbaren Kosten hergestellt werden können.

Diese Aufgaben werden gelöst durch ein einschichtig aufgebautes plättchenförmiges Metallpigment mit planparallelen Reflexionsebenen, das aus einer kupferbasierenden Legierung besteht, die durch Kondensation aus der Dampfphase abgeschieden ist. Als Legierungspartner eignen sich bevorzugt Aluminium, aber auch die Metalle Silber, Palladium und Silicium entweder einzeln oder in Kombination. Die Koloristik der neuartigen goldglänzenden Pigmente ist überwiegend bestimmt vom Verhältnis von Kupfer zu den unbunten Legierungsbestandteilen. Je höher der Kupferanteil ist, desto rotgoldener sind die Flakes. Silicium erhöht die Farbtiefe der Flakes. Typische Zusammensetzungen von Plättchen mit rotgoldenem bis gelb- bzw. grüngoldenem Glanz enthalten neben Kupfer 1 bis 49 % Aluminium und optional 0,1- 6 % Silicium. Die Plättchendicke liegt bei 10-100 nm, vorzugsweise bei 20-60 nm und lässt sich ohne Schwierigkeiten variieren. Sehr dünne Plättchen sind teilweise transparent.

Ein besonderes Charakteristikum der goldglänzenden Pigmente sind ihre perfekten planparallelen Oberflächen, ihr störungsfreier struktureller Aufbau und ihre gleichförmige Plättchendicke, was höchste Reflexionswerte ermöglicht.

Die wichtigsten Stufen des Herstellprozesses sind Aufbringen einer Release-Schicht auf einen Träger, Kondensationen der Legierung in Filmform auf der Release-Schicht, Ablösung des metallischen Films, Filmzerkleinerung und gegebenenfalls Klassierung der Pigmentpartikel. Die Verdampfung der Metalle im Vakuum erfolgt nach bekannten Methoden unter Verwendung der vorgefertigten Legierungen oder der Einzelmetalle.

Die erfindungsgemäßen Pigmente zeigen höchste Brillanz und sind in vielen Anwendungsbereichen ausreichend korrosionsstabil. Ist eine besondere Korrosionsstabilität erforderlich, so ist es möglich, durch Oberflächenbelegung der hochglänzenden Pigmente deren Stabilität zu verbessern. Im Allgemeinen sind die Oberflächenbelegungen hinreichend dünn und beeinträchtigen das Glanzverhalten der Metallflakes praktisch nicht. Oberflächenbelegungen zur Verbesserung des Korrosionsverhaltens können bereits in der Vakuumkammer im Zuge der Metallfilmabscheidung, beispielsweise durch Vakuumabscheidung von SiOₓ beiderseits des Metallfilms oder über nasschemische Methoden während oder im Anschluss an die Filmzerkleinerung aufgebracht werden. Je nach Anforderung haben sich Schutzschichten aus SiO₂, Al₂O₃, Phosphat, Phosphorsäureester, Phosphinsäure, Silanen oder Kombinationen dieser Verbindungen bewährt.

Verwendung finden die goldglänzenden Metallflakes für Lacke, Anstrichmittel, Farben, Druckfarben, Kunststoffeinfärbung, Kosmetik, Glas und Keramik.

### Im Einzelnen ist Folgendes auszuführen:

Die vorliegende Erfindung befasst sich mit einem neuartigen, aus einer Legierung bestehenden Effektpigment. Unter einer Legierung wird in diesem Zusammenhang die feste Lösung zweier oder mehrerer Metalle verstanden. Überraschungsweise lassen sich koloristisch geeignete Legierungen aus der Dampfphase im Vakuum abscheiden. Aus Legierungen bestehende Pigmente, die durch simultane Kondensation von Metalldämpfen entstehen, sind bislang unbekannt.

Geeignete Legierungen für die Entwicklung von brillanten Echtgold-Ersatzpigmenten über pvd-Verfahren sind kupferbasierend und enthalten beispielsweise als weitere Legierungsbestandteile Aluminium und/oder Silber, Palladium und Silicium. Von den genannten Metallen ist Aluminium der bevorzugte Legierungspartner von Kupfer, nicht nur wegen seiner überragenden Reflektivität und seines niedrigen spezifischen Gewichtes. Silber- und Palladium-Anteile in der abgeschiedenen Legierung erhöhen die Korrosionsstabilität der goldglänzenden Metallflakes, Silicium beeinflusst die Koloristik. Die Metalle können einzeln oder als vorab erschmolzene Legierungen verdampft werden.

Koloristisch lässt sich über die Zusammensetzung der abgeschiedenen Legierung ein weiter Bereich zwischen Rotgold, Bleichgold und Grüngold gestalten. Hierbei spielt das farbgebende Kupfer die Hauptrolle. So haben die Oberflächen von Pigmenten mit 90 Gew.-% Kupfer einen rotgoldenen Glanz, während diejenigen mit nur 60 Gew.-% Kupfer blassgelb aussehen. Silicium wirkt helligkeitsreduzierend und macht sich optisch in einer größeren Farbtiefe der goldglänzenden Flakes bemerkbar.

Koloristisch interessante Zusammensetzungen liegen beispielsweise 90 - 99 % Kupfer, 10 - 1 % Aluminium. Liegen sehr dünne Flakes vor, so können diese teilweise Transparenz aufweisen. Interferenzeffekte können die oben beschriebene Koloristik geringfügig beeinflussen.

Die Dicke der goldglänzenden Metallflakes ist ohne Schwierigkeiten über die Verdampfungsrate der Metalle und über die Bandgeschwindigkeit einzustellen und zu steuern. Aus wirtschaftlichen Gründen werden i. a. Bandgeschwindigkeiten zwischen 2 und 5 m/s gewählt. Je nach Wunsch können dabei Metallfilmdicken zwischen 10 und 100 nm eingestellt werden. Für die Herstellung von goldglänzenden Metallflakes sind vorwiegend Dicken zwischen 20 und 60 nm von Interesse. Die Partikelgröße wird nach Ablösen der Metallfilme von der Unterlage durch mechanische Zerkleinerung der Filmbruchstücke eingestellt. Die Zerkleinerung kann mit geeigneten Rührern, Pumpen oder mit Hilfe von Ultraschallgeräten der in einem Lösemittel suspendierten Filmbruchstücke erfolgen. Im Allgemeinen sind Partikelgrößen zwischen 3 und 150 µm, vorzugsweise zwischen 5 und 50 µm von Interesse. Wie bei allen Effektpigmenten lässt sich der optische Eindruck durch Klassieren, d. h. Einstellen enger Partikelgrößenverteilungen mit unterschiedlichem mittlerem Durchmesser variieren. Die Klassierung kann beispielsweise in einem Dekanter vorgenommen werden.

Die charakteristischen Eigenschaften der goldfarbenen Metallflakes sind ihr hohes Reflexionsvermögen und eine sehr hohe Ergiebigkeit des Pigments bei der Anwendung. Das hohe Reflexionsvermögen beruht auf den spiegelglatten störungsfreien Oberflächen und der gleichförmigen Dicke der Plättchen. Mögliche Streuzentren werden auf ein Minimum reduziert. Die hohe Ergiebigkeit des Pigmentes gründet sich auf die geringe Dicke der Einzelpartikel, so dass mit einer vergleichsweise geringen Pigmentmenge bereits ausreichend hohe Deckung erzielt werden kann.

Die erfindungsgemäßen Pigmente werden hergestellt, indem optional eine Unterlage, beispielsweise eine PET-Folie oder ein endlos umlaufendes Metallband, mit einem Releasecoat beschichtet wird. Die Beschichtung der Unterlage mit einem löslichen Harz oder Wachs kann über Tauch- oder Druckverfahren vorgenommen werden.

Die in Frage kommenden Metalle werden dann einzeln oder als vorgeschmolzene Legierung beispielsweise in einem oder mehreren Verdampfern im Hochvakuum verdampft und auf der Unterlage kondensiert.

Anschließend wird der Metallfilm abgelöst und in einem anwendungstechnisch geeigneten Lösemittel wie Isopropanol, Isopropylacetat, Ethylacetat oder Glykolether mittels eines geeigneten Rührwerks oder einer hohe Scherkräfte ausübenden Pumpe auf Pigmentpartikelgröße zerkleinert. Ultraschallzerkleinerung kann zusätzlich oder alternativ eingesetzt werden. Gegebenenfalls werden die Pigmentpartikel noch klassiert.

Um die Metallflächen der erfindungsgemäßen Pigmente vor Korrosion zu schützen, ist es möglich, diese in einem zusätzlichen Schritt mit Korrosionsschutzschichten zu versehen. Da diese Schichten dünn und niedrig brechend sind, haben sie praktisch keinen Einfluss auf das optische Verhalten der Pigmente. Grundsätzlich sind zwei Methoden des Aufbringens von Korrosionsschutzschichten möglich: Einmal durch Aufdampfen einer beidseitigen Schutzschicht während des Verdampfungsprozesses, zum anderen durch Auffällen einer Passivierungsschicht während oder nach der Zerkleinerung der Filmbruchstücke. Das Aufdampfen von Schutzschichten während des Verdampfungsprozesses wird in der Reihenfolge Schutzschicht, Legierungsfilm, Schutzschicht vorgenommen, wobei i. a. schwerlösliche aber leicht zu verdampfende Materialien wie SiOₓ oder MgF₂ gewählt werden. Das Auffällen einer Passivierungsschicht wird als nasschemische Reaktion durchgeführt. Bewährt hat sich das Auffällen einer dünnen SiO₂-Schicht, zweckmäßiger Weise über einen Sol/Gel-Prozess durch Hydrolyse von Silanen und anschließende Silanolbehandlung, weiterhin die Auffällung von Aluminiumoxid, Siliciumoxid, Phosphat, Phosphorsäure, Phosphorsäureestem, Phosphinsäure, Silanen, organisch modifizierten Silicaten, Titanaten, Zirkonaten oder methacrylatbasierenden Polymerschichten oder Kombinationen dieser Verbindungen.

Nachfolgend wird die Erfindung anhand bevorzugter Ausführungsbeispiele näher beschrieben.

### Beispiel 1

In einem Roll-Coater der Firma Leybold Heraeus wird eine PET-Unterlagefolie von 48 µm Dicke, welche mit einem Releasecoat beschichtet ist, mit einer Kupfer/Aluminiumlegierung im Hochvakuum beschichtet. Der Releasecoat besteht aus acetonlöslichem Methylmethacrylatharz und wird in einem separaten Arbeitsgang vorab aufgedruckt. Das Vakuum wird auf 5.10⁻⁴ mbar eingestellt.

Die Geschwindigkeit, mit der die Unterlagefolie abgewickelt wird, beträgt 4 m/s. Die Kupfer/Aluminiumlegierung mit einem Kupfergehalt von 92 % wird in einem Schiffchen über Widerstandsheizung in einer Rate verdampft, die zu einer Metallfilmdicke auf der bewegten Unterlagefolie von 40 nm führt. Nach abgeschlossener Beschichtung wird der Roll-Coater mit Stickstoff geflutet, der metallisierte PET-Wickel wird entnommen und in einer Ablösestation mit Aceton behandelt. Durch Auflösen des Releasecoats wird der Metallfilm von der Unterlagefolie abgetrennt. Die metallischen Filmfragmente werden in einer Zentrifuge aufkonzentriert und von der releasecoathaltigen Acetonlösung abgetrennt. Danach wird der Filterkuchen in eine Isopropanollösung eingetragen, wo der Film über 20 Minuten zerkleinert wird. Die Suspension, in der die Metallflakes vorliegen, ist 12 %-ig.

Die erhaltene Pigmentsuspension zeigt goldglänzende Pigmentpartikel höchster Brillanz. Die mittlere Partikelgröße der Plättchen liegt bei 10 µm (Cilas). Chemische Analysen zeigen, dass das Pigment 92 % Kupfer und 8 % Aluminium enthält. Röntgenanalysen ergeben, dass die Elemente in einer homogenen Legierungsform vorliegen.

### Beispiel 2

a) In der in Beispiel 1 beschriebenen Anlage wird ein KupferAluminium-Siliciumfilm abgeschieden. Hierbei wird analog Beispiel 1 vorgegangen mit dem Unterschied, dass neben der Verdampfungsquelle von Kupfer/Aluminium eine weitere für Silicium installiert ist. Die für die Verdampfung bereitgestellte Kupfer/Aluminiumlegierung enthält 94 % Kupfer. Die Dicke des aus der Dampfphase abgeschiedenen Films wird auf 45 nm eingestellt. Die Ablösung des Films und die Zerkleinerung der Filmfragmente auf Pigmentgröße erfolgt wie in Beispiel 1.
   Das in Suspension erhaltene Pigment hat einen tiefen rotgoldenen Glanz. Es enthält 2 % Silicium. Die mittlere Partikelgröße liegt nach Cilasmessungen bei 11 µm.
b) Stabilisierung: 1000 g der oben hergestellten 12 %-igen Pigmentsuspension in Isopropanol werden bis zum Siedepunkt erhitzt und mit 11 g Tetraethoxysilan und 10 g Wasser versetzt. Danach wird über einen Dosimaten eine 10 %-ige wässrige Lösung DMEA zugegeben bis der pH-Wert 8 erreicht ist. Unter Beibehaltung des pH-Wertes wird über einen Zeitraum von 2 Stunden gerührt. Danach werden 1,4 g Diphenyldimethoxysilan, das in 12 g Isopropanol gelöst ist, gleichmäßig über 4 Stunden unter Rühren zudosiert. Anschließend gibt man noch 0,5 g 3-Aminopropyltrimethoxysilan (Dynasilan AMMO) hinzu und kühlt das Gemisch über 10 Stunden unter Rühren ab.

Das Metallpigment liegt danach korrosionsstabilisiert vor.

## Patentansprüche

1. Glänzende kupferbasierende Metallflakes, die neben mindestens 51% Kupfer zwischen 1 % und 49% Aluminium enthalten und über Vakuumabscheidung von Metallfilmen auf eine Unterlage, Ablösen der Filme von der Unterlage und anschließende Zerkleinerung der Filme hergestellt sind.

2. Glänzende kupferbasierende Metallflakes nach Anspruch 1, **dadurch gekennzeichnet, dass** die Flakes als zusätzlichen Legierungsbestandteil Silicium enthalten.

3. Glänzende kupferbasierende Metallflakes nach einem der Ansprüche 1 bis 2, **dadurch gekennzeichnet, dass** das plättchenförmige Effektpigment planparallele Oberflächen und eine Dicke zwischen 10 und 100 nm, vorzugsweise zwischen 20 und 60 nm aufweist.

4. Glänzende kupferbasierende Metallflakes nach einem der Ansprüche 1 bis 3, **dadurch gekennzeichnet, dass** die Oberfläche der Pigmentpartikel mit einer Korrosionsschutzschicht belegt ist.

5. Glänzende kupferbasierende Metallflakes nach Anspruch 4, **dadurch gekennzeichnet, dass** die Korrosionsschutzschicht Aluminiumoxid, Siliciumoxid, Phosphat, Phosphorsäure, Phosphorsäureester, Phosphinsäure, Silane, organisch modifizierte Silicate, Titanate, Zirkonate oder methacrylatbasierende Polymerschichten oder Kombinationen dieser Verbindungen enthält.

6. Verfahren zur Herstellung glänzender kupferbasierender Metallflakes nach einem der Ansprüche 1 bis 5 mit folgenden Verfahrensschritten:
a) ggf. Aufbringen eines Releasecoats auf eine Unterlage
b) Aufbringen eines Metallfilmes umfassend wenigstens die Komponenten Kupfer und Aluminium auf den Releasecoat bzw. die Unterlage
c) Ablösen des Metallfilms
d) Zerkleinern der Pigmentteilchen

7. Verfahren nach Anspruch 6, **dadurch gekennzeichnet, dass** das Aufbringen des Metallfilms durch Verdampfen der Legierung erfolgt.

8. Verfahren nach Anspruch 6, **dadurch gekennzeichnet, dass** das Aufbringen des Metallfilms durch getrenntes Verdampfen der Legierungsbestandteile erfolgt.

9. Verfahren nach Anspruch 6, **dadurch gekennzeichnet, dass** das Aufbringen des Metallfilms durch getrenntes Verdampfen einer Legierung und eines oder mehrerer weiterer Bestandteile erfolgt.

10. Verfahren nach einem der Ansprüche 6 bis 9, **dadurch gekennzeichnet, dass** das Aufbringen des Metallfilms durch Elektronenstrahl, Widerstands- oder Strahlungsbeheizen erfolgt.

11. Verfahren nach einem der Ansprüche 6 bis 10, **dadurch gekennzeichnet, dass** das Aufbringen des Metallfilms durch Flash-Verdampfen, Simultanverdampfen oder Springstrahlverdampfen erfolgt.

## Claims

1. Lustrous copper-based metal flakes that contain, in addition to at least 51 % copper, 1 % to 49 % aluminum and are produced via vacuum deposition of metal films onto a carrier sheet, stripping of the films from the carrier sheet, and subsequent comminuting of the films.

2. Lustrous copper-based metal flakes according to claim 1, **characterized in that** the flakes contain silicon as an additional alloy component.

3. Lustrous copper-based metal flakes according to any of claims 1 through 2, **characterized in that** the flake-shaped effect pigment has plane-parallel surfaces and a thickness between 10 and 100 nm, preferably between 20 and 60 nm.

4. Lustrous, copper-based metal flakes according to any of claims 1 through 3, **characterized in that** the surface of the pigment particles is coated with an anticorrosive layer.

5. Lustrous copper-based metal flakes according to claim 4, **characterized in that** the anticorrosive layer contains aluminum oxide, silicon oxide, phosphate, phosphoric acid, phosphoric ester, phosphinic acid, silanes, organically modified silicates, titanates, zirconates or methacrylate-based polymer layers or combinations of these compounds.

6. A method for producing lustrous, copper-based metal flakes according to any of claims 1 through 5 with the following process steps:
a) optionally applying a release coat on a carrier sheet
b) applying of a metal film onto the release coat or the carrier sheet comprising at least the components copper an aluminum comminuting to pigment particles
c) stripping of the metal film
d) comminuting to pigment particles.

7. A method according to claim 6, **characterized in that** applying of the metal film takes place through evaporation of the alloy components.

8. A method according to claim 6, **characterized in that** applying of the metal film takes place through separate evaporation of the alloy components.

9. A method according to claim 6, **characterized in that** applying of the metal film takes place through separate evaporation of an alloy and one or more additional components.

10. A method according to any of claims 6 through 9, **characterized in that** applying of the metal film takes place through electron beam, resistance heating, or radiation heating.

11. A method according to any of claims 6 through 10, **characterized in that** applying of the metal film takes places through flash evaporation, simultaneous evaporation, or jumping beam evaporation.

## Revendications

1. Paillettes métalliques brillantes à base de cuivre qui contiennent, outre au moins 51 % de cuivre, entre 1 % et 49 % d'aluminium, et qui sont fabriquées par dépose sous vide de films métalliques sur un support, retrait des films du support et fragmentation consécutive des films.

2. Paillettes métalliques brillantes à base de cuivre selon la revendication 1, **caractérisées en ce que** les paillettes contiennent du silicium en tant que constituant d'alliage supplémentaire.

3. Paillettes métalliques brillantes à base de cuivre selon l'une des revendications 1 ou 2, **caractérisées en ce que** le pigment à effet en forme de pastille comporte des surfaces planes parallèles et une épaisseur comprise entre 10 et 100 nm, de préférence entre 20 et 60 nm.

4. Paillettes métalliques brillantes à base de cuivre selon l'une quelconque des revendications 1 à 3, **caractérisées en ce que** la surface des particules de pigments est revêtue d'une couche de protection contre la corrosion.

5. Paillettes métalliques brillantes à base de cuivre selon la revendication 4, **caractérisées en ce que** la couche de protection contre la corrosion contient de l'oxyde d'aluminium, de l'oxyde de silicium, du phosphate, de l'acide phosphorique, de l'ester phosphorique, de l'acide phosphinique, des silanes, des silicates organiquement modifiés, des titanates, des zirconates ou des couches polymères à base de méthacrylates ou des combinaisons de ces composés.

6. Procédé destiné à la fabrication de paillettes métalliques brillantes à base de cuivre selon l'une quelconque des revendications 1 à 5, comportant les phases de procédé suivantes :
a) application éventuelle d'une couche antiadhésive sur un support,
b) application sur la couche antiadhésive ou sur le support d'un film métallique contenant au moins les composants cuivre et aluminium,
c) retrait du film métallique,
d) fragmentation des particules de pigments.

7. Procédé selon la revendication 6, **caractérisé en ce que** l'application du film métallique est effectuée par la vaporisation de l'alliage.

8. Procédé selon la revendication 6, **caractérisé en ce que** l'application du film métallique est effectuée par la vaporisation séparée des constituants de l'alliage.

9. Procédé selon la revendication 6, **caractérisé en ce que** l'application du film métallique est effectuée par la vaporisation séparée d'un alliage et d'un ou de plusieurs autres constituants.

10. Procédé selon l'une quelconque des revendications 6 à 9, **caractérisé en ce que** l'application du film métallique est effectuée par jet électronique, chauffage par résistance ou par rayonnement.

11. Procédé selon l'une quelconque des revendications 6 à 10, **caractérisé en ce que** l'application du film métallique est effectuée par vaporisation flash, vaporisation simultanée ou vaporisation par rayonnement à saut.
